# EUROPEAN PATENT APPLICATION

(11) **EP 1 065 176 A1**
(43) Date of publication of application: **03.01.2001**
(21) Application number: 99304544.2
(22) Date of filing: 10.06.1999
(51) Int. Cl.: C03C 1/00, C03C 1/02, C03C 13/00

(54) **Production of man-made vitreous fibres**

(71) Applicant: Rockwool International A/S, 2640 Hedehusene (DK)
(72) Inventor: The designation of the inventor has not yet been filed
(74) Representative: Samuels, Lucy Alice

(57) **Abstract**

A process for producing man-made vitreous fibres containing at least 14% Al₂O₃ comprises melting a mineral charge in a furnace, removing the melt and fiberising it, in which the mineral charge comprises aluminium-chromium slag.

## Description

This invention relates to processes of making high alumina content man-made vitreous fibres (MMVF) from a mineral charge and to raw materials suitable for this purpose.

MMVF may be made by forming a mineral melt by melting a mineral charge in a furnace and fiberising the melt, usually by a centrifugal fiberising process.

In some of the furnaces which are used, there is a large pool of melt into which the mineral charge is melted. Examples are tank and electric furnaces. In such furnaces, mineral material in various physical forms, eg lump or powder, can be incorporated into the melt with relative ease, since melting is conducted into a large volume of previously melted material. However, in order to obtain complete melting it is necessary that the melt be held at a temperature above the melting point of the relevant raw materials.

In other types of furnace, melting is more difficult. A shaft furnace contains a self-supporting column of solid coarse mineral material and combustion gases permeate through this column so as to heat it and cause melting. The melt drains to the bottom of the column, where a pool of melt is usually formed, and the melt is removed from the base of the furnace. Since the column has to be both self-supporting and permeable the mineral materials should be relatively coarse and should have considerable strength even at the high temperatures in the column (which may exceed 1,000°C). Such furnaces are often used for production of fibres of the type that are often referred to as rock (including stone or slag) fibres.

It is necessary for the total charge in the furnace (i.e., crushed mineral alone or crushed mineral plus briquettes) to provide the composition which is desired for the MMV fibres which are to be made.

There is a particular interest in the manufacture of MMVF insulation containing more than 14%, and often 18 to 30%, alumina, for instance as described in W096/14274 and W096/14454. These mention the general concept of use of waste materials as part of the starting material. These include high alumina (20 to 30%) slags such as ladle slag, filter dust and high alumina waste from the production of refractory materials. W096/14274 describes the production of specified physiologically soluble fibres in various ways, including methods using various furnaces such as electric furnaces and cupola furnaces.

In shaft furnaces in particular the residence time of material in the small melt pool at the base of the furnace is short, and the raw materials must be incorporated rapidly into this pool of melt if a melt is to be obtained which is suitable for provision of final products having good properties.

However, the materials such as bauxite which are useful for providing high alumina fibres often themselves have high content of alumina. Bauxite is very difficult to melt in the furnace since its melting point is around 1,900°C. This can be a problem in tank or electric furnaces but is particularly acute in shaft furnaces where the melt pool is small and residence time short. It is therefore known to grind bauxite to a small particle size and incorporate the particles in bonded briquettes. It is believed that bauxite, instead of melting, can dissolve in the pool of previously melted mineral material. The small particle size enables the bauxite to dissolve more completely in the melt. However, even this may not give the desired results, the bauxite may not be fully incorporated into the melt and there may be a build-up of non-dissolved material at the base of the furnace. The grinding process also necessitates use of a large amount of energy and time.

Therefore it would be desirable to provide a process for the production of high alumina MMVF which is particularly suitable for use in shaft furnaces and in which the raw materials are fully incorporated into the melt, so as to provide a final product having the desired high alumina composition and good mechanical, solubility and other properties. It would be desirable to do this with a process having improved energy and cost efficiency.

According to the invention we provide a process of producing man-made vitreous fibres having a composition which contains at least 14% aluminium measured as weight Al₂O₃based on oxides, comprising providing in a furnace a mineral charge, melting the charge to provide a mineral melt, removing melt from the furnace and fiberising the melt, characterised in that the charge comprises aluminium-chromium slag.

We have surprisingly found that aluminium-chromium slag, out of the wide range of aluminium-containing materials which are available, is particularly suitable for the provision of high alumina fibres. In particular, we have found that it is possible to include it in a furnace such as a shaft furnace in the form of coarse lumps but still incorporate substantially all of the raw material aluminium-chromium slag into the melt. This is particularly surprising in view of its very high content of Al₂O₃, which is known to melt at about 1,900°C. The temperature of the melt in a furnace is rarely above 1,700°C. We believe the aluminium chromium slag does dissolve in the melt. It is known that alumina-containing materials of high melting point can be dissolved in a melt, but it has hitherto been considered essential to provide them as very small particles. We have found surprisingly that aluminium-chromium slag can be melted when in the form of coarse lumps. We also find surprisingly that coarse lumps of this material are incorporated into the melt by dissolution or melting more efficiently than equivalently sized bauxite. In this specification we include dissolution within the general term "melting".

We find that incorporation of the aluminium-chromium slag into the melt is aided by the inclusion in the charge of materials which provide calcium oxide (CaO) in the melt. In particular raw materials which contain calcium carbonate are beneficial. These include lime, dolomite and limestone.

A particularly preferred material for use in combination with the aluminium-chromium slag is blast furnace slag. We find that this gives particularly good melting and dissolution properties in combination with the aluminium-chromium slag.

Converter slag may also be used instead of or in addition to blast furnace slag. Converter slag is beneficial when it is intended that the fibres should contain iron, since it contains high levels of iron (about 18 to 35% FeO).

The aluminium-chromium slag may be provided in the form of small particles, for instance as a component of bonded briquettes. However, an advantage of the invention is that it can be provided in the form of coarse lumps. This saves the energy and cost involved in grinding the material to a very small size.

Generally the aluminium-chromium slag charged to the furnace has size at least 90% above 10mm, preferably above 20 mm. Usually it has size at least 90% below 120 mm and preferably is at least 90% below 90 mm, in particular 90% below 80 mm. Size at least 90% below 40 mm is preferred. Preferred size distributions are 90% in the range 20 to 80 mm, preferably 20 to 40 mm. Average particle size may range from 30 to 100 mm, preferably 20 to 40 mm. In this specification, size is the maximum dimension of a lump or particle and can be measured by conventional methods such as screening with a square mesh screen.

The aluminium-chromium slag has high content of Al₂O₃. Generally the content of Al₂O₃, measured by weight of the slag, is at least 80%, preferably at least 85% and may even be at least 88%. Generally it is not more than 95%.

It may have content of metallic aluminium, for instance up to about 2%, measured by weight of the slag.

The aluminium-chromium slag generally has a content of chromium not more than 15%, generally not more than 12 or 10%, Cr₂O₃ based on weight of the slag. The amount of Cr₂O₃ is often at least 2%, in particular at least 5%.

The slag may have content of metallic chromium, for instance about 0.5 up to about 2%, measured by weight of the slag.

The slag may also contain CaO, Fe₂O₃ and MgO in amounts each below about 1% of the slag, by weight. K₂O may be present in higher amounts, for instance from 1 to 4%. Other materials, such as Na₂O, SiO₂, TiO₂, P₂O₅ and MnO may also be present but in low amounts, usually below 0.5%.

Aluminium-chromium slag is a by-product of the aluminothermic reduction of Cr₂O₃ to produce metallic chromium. Details of this process can be found in Ullman's Electronic Encyclopedia of Industrial Chemistry, 6th Edition, 1998, "Chromium and Chromium Alloys-Chromium", Chapter 1.4 Production.

In this process high purity aluminium powder is blended with Cr₂O₃ and other desired materials which may include lime. The blend is charged into a vessel lined with a refractory (often Al₂O₃ or slag from the process). The charge is ignited, electrically or with an explosion. The ensuing reaction leads to reduction of the Cr₂O₃ and a temperature above 2,000°C, which allows separation of the metal from the slag.

It is particularly beneficial to be able to use the slag from this process, since it is a waste product. At present, some of the slag may be used as insulation for the reduction process itself, and it can also be used as a refractory for insulation purposes in other environments but large amounts are often sent to landfill. It is also economical. It can be provided with the sizes discussed above, or selection of the desirable ranges may be necessary. Alternatively it may be received in the form of large buttons which can be reduced in size to lumps of the preferred size distributions discussed above.

The charge may include any other suitable charge materials in the form of coarse rock and virgin or waste materials. In particular, the charge may comprise materials in the form of bonded briquettes. These are provided from small particles which are mixed with binder, shaped and molded into the desired briquette shape and the binder is cured.

The binder may be a hydraulic binder, that is one which is activated by water, for instance cement, eg Portland cement. Other hydraulic binders can be used as partial or complete replacement for the cement and examples include lime, blast furnace slag powder (JP-A-51075711) and certain other slags and even cement kiln dust and ground MMVF shot (US 4662941 and US 4724295).

Alternative binders include clay. The briquettes may also be formed with an organic binder such as molasses, for instance as described in WO95/34514; such briquettes are described herein as formstones.

In the process at least 10 or 20%, and even preferably at least 30% of the charge (by weight) may be provided by briquettes. In some processes higher amounts, eg 45 to 55% may be preferred. Sometimes amounts above 75% or even above 80% are preferred.

An advantage of the use of the aluminium-chromium slag is that it is not necessary to incorporate it in briquettes. It is then possible to form the briquettes substantially only from materials which are received in small particulate form, such as mineral wool waste. It would in particular be beneficial to provide briquettes consisting substantially only of mineral wool waste and binder where the wool waste has the same composition as the intended fibres to be produced by the process. The production of briquettes is then energy efficient (no grinding to small size is necessary) and it is only necessary to balance the components of the materials excluding the briquettes in order to provide the desired charge composition.

The fibres produced in the invention have high aluminium content (measured by weight of Al₂O₃), namely at least 14%, preferably at least 15%, more preferably at least 16% and in particular at least 18%. Generally the amount of aluminium is not more than 35%, preferably not more than 30%, more preferably not more than 26 or 23%.

In general the fibres and the melt from which they are formed have an analysis (measured as % by weight of oxides) of other elements within the various ranges defined by the following normal and preferred lower and upper limits :
SiO₂: at least 30, 32, 35 or 37; not more than 51, 48, 45 or 43
CaO: at least 2, 8 or 10; not more than 30, 25 or 20
MgO: at least 2 or 5; not more than 25, 20 or 15
FeO (including Fe₂O₃): at least 2 or 5; not more than 15, 12 or 10
FeO+MgO: at least 10, 12 or 15; not more than 30, 25 or 20
Na₂O+K₂O: zero or at least 1; not more than 10
CaO+Na₂O+K₂O: at least 10 or 15; not more than 30 or 25
TiO₂: zero or at least 1; not more than 6, 4 or 2
TiO₂+FeO: at least 4 or 6; not more than 18 or 12
B₂O₃: zero or at least 1; not more than 5 or 3
P₂O₅: zero or at least 1; not more than 8 or 5
Others: zero or at least 1; not more than 8 or 5.

Preferably the fibres do not contain more than 1% chromium.

The invention is of particular value in the production of fibres which can be shown to be soluble in physiological saline. Suitable high aluminium, biologically soluble, fibres which can advantageously be made in the present invention are described in W096/14454 and W096/14274. Others are described in W097/29057, DE-U-2970027 and W097/30002. Reference should be made to each of these.

The fibres preferably have an adequate solubility in lung fluids as shown in vivo tests or in vitro tests, typically conducted in physiological saline buffered to about pH 4.5. Suitable solubilities are described in WO96/14454. Usually the rate of dissolution is at least 10 or 20nm per day in that saline.

The fibres preferably have sintering temperature above 800°C, more preferably above 1000°C.

The melt preferably has a viscosity at fibre forming temperature of 5 to 100 poise, preferably 10 to 70 poise at 1400°C.

In the invention the furnace may be a furnace in which there is a large pool of mineral melt into which the mineral material is charged, and the invention gives benefits in such processes. However, it gives particular benefits when the furnace is a shaft furnace. In such a furnace a self-supporting stack of mineral material is heated and melt drains to the base of the stack, as discussed above. Usually it forms a pool at the base of the furnace from which it is run off to the fibre-forming process. In some cases the melt can be run from the base of the stack into another chamber where it collects as a pool and from which it is run off to the fibre forming process. The preferred type of shaft furnace is a cupola.

Preferably at least 10% and in particular at least 15 or at least 20%, and even at least 50%, of the aluminium in the fibres (by weight Al₂O₃ based on oxides) is provided by the aluminium-chromium slag. In some processes at least 75% and even substantially all of the aluminium in the fibres can be provided by the aluminium-chromium slag.

The content of aluminium-chromium slag in the charge, by weight of the charge, is often not more than 30%, preferably not more than 20%, and may be below 10%. It is usually at least 2%, for instance around 5%.

Other materials in the charge may be any suitable virgin or waste materials.

Other suitable wastes that can be used in the invention include slags from the metallurgical industry, especially steelmaking slags such as converter slags or EAF slags, and slags from the ferro-alloy industry such as ferro-chromium, ferro-manganese or ferro-silica slags; slags and residues from the primary production of aluminium such as spent aluminium pot lining or red mud; dried or wet sludge from the paper industry; sewage sludge; molasses; bleaching clay; residues from the incineration of household and industrial wastes, especially slags or filter ashes from the incineration of municipal solid wastes; glass waste (or slags) from the vitrification of other waste products; glass cullet; waste products from the mining industry, especially minestone from the excavation of coal; residues from the incineration of fossil fuel, especially from the combustion of coal at power plants; spent abrasive sand; spent moulding sand from iron and steel casing; waste sieving sand; glass reinforced plastic; and fines and breakage waste from the ceramic and brick industry. Toxic virgin rock can also be used as waste.

The MMV fibres may be made from the fibre-forming mineral melt in conventional manner. Generally they are made by a centrifugal fibre-forming process. For instance the fibres may be formed by a spinning cup process in which they are thrown outwardly through perforations in a spinning cup, or melt may be thrown off a rotating disc and fibre formation may be promoted by blasting jets of gas through the melt. Preferably a cascade spinner is used and fibre formation is conducted by pouring the melt onto the first rotor in a cascade spinner. Preferably the melt is poured onto the first of a set of two, three or four rotors, each of which rotates about a substantially horizontal axis, whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The MMV fibres may be used for any of the purposes for which MMV products are known. These include fire insulation and protection, thermal insulation, noise reduction and regulation, construction, horticultural media, and reinforcement of other products such as plastic and as a filler. The materials may be in the form of bonded batts (which may be flat or curved) or the materials may be comminuted into a granulate. Bonded batts include materials such as slabs and pipe sections.

The following are examples.

### Example 1

This example sets out the compositions of two suitable aluminium-chromium slags for use in the invention.

| **Composition 1:** | | | |
|---|---|---|---|
| Al₂O₃ | 88.1 | K₂O | 2.3 |
| Cr₂O₃ | 8.9 | MgO | 0.5 |
| CaO | 0.6 | Na₂O | 0.1 |
| Fe₂O₃ | 0.2 | SiO₂ | 0.1 |

| **Composition 2:** | |
|---|---|
| % SiO₂ | <0.1 |
| % Al₂O₃ | 87.8 |
| % FeO | <0.1 |
| % CaO | 0.8 |
| % MgO | 0.2 |
| % Na₂O | <0.1 |
| % K₂O | 2.0 |
| ppm Cr | 46532 |
| % Moisture, 110°C | <0.1 |
| % Ign. loss, 110-1050°C | Positive (0.6) |

### Example 2

This example describes charges for a cupola furnace which can be fiberised, for instance using a cascade spinner.
(i)
   5% aluminium-chromium slag (coarse lumps)
   64% diabase
   11% converter slag
   20% formstones comprising:
      3% burnt lime
      9% molasses
      78% MMVF waste
      10% rock and wool fines
(ii)
   6% aluminium-chromium slag (coarse lumps)
   54% diabase
   11% blast furnace slag
   5% converter slag
   5% pit melt (lumps)
   20% formstones (as in (i) above)
(iii)
   9% blast furnace slag
   6% converter slag
   58% diabase
   27% formstones comprising:
      3% burnt lime
      9% molasses
      60% MMVF waste
      10% rock and wool fines
      18% aluminium-chromium
      slag (fine particles)
(iv)
   52% diabase
   10% blast furnace slag
   7% converter slag
   31% cement briquettes comprising:
      12% cement
      55% MMVF waste
      4% crushed pit melt
      6% olivine sand
      23% aluminium-chromium slag (fine particles).
(iv)
   43% diabase
   28% blast furnace slag
   3% sinter
   6% aluminium-chromium slag (coarse lumps)
   20% form stones (as in (i) above).
(v)
   52% diabase
   21% blast furnace slag
   3% sinter
   4% aluminium-chromium slag (coarse lumps)
   20% form stones (as in (i) above).

## Claims

1. A process of producing man-made vitreous fibres having a composition which contains at least 14% aluminium measured as weight Al₂O₃ based on oxides, comprising
providing in a furnace a mineral charge,
melting the charge to provide a melt,
removing melt from the furnace and fiberising the melt,
characterised in that the charge comprises aluminium-chromium slag.

2. A process according to claim 1 in which the aluminium -chromium slag is charged as lumps having size 90% by weight above 20 mm.

3. A process according to claim 1 or claim 2 in which the aluminium-chromium slag is in the form of lumps having a size 90% by weight below 40 mm.

4. A process according to any preceding claim in which the furnace is a shaft furnace and the charge is a self-supporting stack.

5. A process according to claim 4 in which the furnace is a cupola furnace.

6. A process according to any preceding claim in which the charge also comprises a material which provides calcium oxide in the melt.

7. A process according to claim 6 in which the material which provides calcium oxide is blast furnace slag or converter slag or a mixture thereof.

8. A process according to claim 6 or claim 7 in which the material which provides calcium oxide is present in an amount of at least 10% of the charge.

9. A process according to any preceding claim in which the aluminium-chromium slag provides at least 10%, preferably at least 20%, of the aluminium in the fibres, measured as weight Al₂O₃ based on oxides.

10. A process according to any preceding claim in which the charge includes briquettes.

11. A process according to any preceding claim in which the aluminium-chromium slag has Al₂O₃ content at least 75 wt.%.

12. A process according to any preceding claim in which the aluminium-chromium slag has Cr₂O₃ content not more than 15 wt.%.

13. A process according to any preceding claim in which the aluminium-chromium slag is charged in an amount such that the content of chromium, measured as Cr₂O₃ based on oxides, in the fibres is not more than 1%.
